# EUROPEAN PATENT SPECIFICATION

(11) **EP 3 825 291 B1**
(45) Date of publication and mention of the grant of the patent: **10.09.2025**
(21) Application number: 19838295.4
(22) Date of filing: 19.06.2019
(51) Int. Cl.: C03C 27/06, E06B 3/677

(54) **GLASS PANEL UNIT AND METHOD FOR MANUFACTURING GLASS PANEL UNIT**
GLASPLATTENEINHEIT UND VERFAHREN ZUR HERSTELLUNG EINER GLASPLATTENEINHEIT
UNITÉ DE PANNEAU DE VERRE ET PROCÉDÉ DE FABRICATION D'UNITÉ DE PANNEAU DE VERRE

(30) Priority: 18.07.2018 JP 2018135366
(43) Date of publication of application: 26.05.2021
(73) Proprietor: Panasonic Intellectual Property Management Co., Ltd., Osaka-shi, Osaka 540-6207 (JP)
(72) Inventor: URIU, Eiichi, Osaka 540-6207 (JP); ABE, Hiroyuki, Osaka 540-6207 (JP); ISHIBASHI, Tasuku, Osaka 540-6207 (JP); HASEGAWA, Kazuya, Osaka 540-6207 (JP); NONAKA, Masataka, Osaka 540-6207 (JP); SHIMIZU, Takeshi, Osaka 540-6207 (JP); ISHIKAWA, Haruhiko, Osaka 540-6207 (JP)
(74) Representative: Müller-Boré & Partner Patentanwälte PartG mbB
(86) International application number: PCT/JP2019/024192
(87) International publication number: WO 2020/017221

(56) References cited:
- EP-A1- 2 966 047
- WO-A1-2016/051787
- JP-A- 2004 152 530
- JP-A- 2018 035 043
- US-A1- 2015 184 446
- US-A1- 2017 210 667
- US-A1- 2017 298 681
- US-B1- 6 420 002

## Description

### Technical Field

The present disclosure generally relates to a glass panel unit and a method for manufacturing the glass panel unit, and more particularly relates to a glass panel unit suitably applicable to windows, among other things, and a method for manufacturing such a glass panel unit.

### Background Art

Patent Literature 1 discloses a glass panel unit. The glass panel unit of Patent Literature 1 includes a first glass panel, a second glass panel, a frame member, and a gas adsorbent. The frame member is provided between the first and second glass panels. The gas adsorbent is provided in a vacuum space surrounded with the first and second glass panels and the frame member. The gas adsorbent contains a getter power (getter material). The gas adsorbent has an elongate shape. As well, JP 2018 035043 A, US 2017/298681 A1, US 2017/210667 A1 and EP 2 966 047 A1 disclose glass panel units.

In glass panel units such as the one disclosed in Patent Literature 1, the gas adsorbent thereof often needs to be hidden behind a window frame, for example, or to be as inconspicuous as possible. That is to say, restriction tends to be imposed so often on the location of the gas adsorbent that it frequently makes the manufacturing process of such glass panel units rather troublesome.

### Citation List

### Patent Literature

Patent Literature 1: WO 2016/051762 A

### Summary of Invention

The problem to be overcome by the present disclosure is to provide a glass panel unit and a method for manufacturing the glass panel unit, both of which contribute to making the manufacturing process of glass panel units less troublesome even when a getter material is provided in a vacuum space.

A glass panel unit according to claim 1 includes a first glass pane, a second glass pane, a frame member, a vacuum space, and a gas adsorbing layer. The second glass pane is arranged to face the first glass pane. The frame member is provided between the first glass pane and the second glass pane to hermetically bond the first and second glass panes together. The vacuum space is surrounded with the first glass pane, the second glass pane, and the frame member. The gas adsorbing layer is provided in the vacuum space. The gas adsorbing layer is formed to cover at least one of the first glass pane or the second glass pane. The gas adsorbing layer contains a getter material.

A method for manufacturing a glass panel unit according to claim 5 includes an assembling step, an evacuation step, and a sealing step. The assembling step includes providing an assembly. The assembly includes a first glass pane, a second glass pane, a peripheral wall, an internal space, a gas adsorbing layer, and an evacuation port. The second glass pane is arranged to face the first glass pane. The peripheral wall is provided between the first glass pane and the second glass pane. The peripheral wall has a frame shape. The internal space is surrounded with the first glass pane, the second glass pane, and the peripheral wall. The gas adsorbing layer is provided in the internal space. The gas adsorbing layer is formed on at least one of the first glass pane or the second glass pane. The gas adsorbing layer contains a getter material. The evacuation port allows the internal space to communicate with an external environment. The evacuation step includes evacuating the internal space through the evacuation port. The sealing step includes closing a predetermined space out of the internal space to separate the predetermined space from the external environment. The assembling step includes the step of forming the gas adsorbing layer. The gas adsorbing layer forming step includes forming the gas adsorbing layer before the first glass pane and the second glass pane are arranged to face each other. The method includes applying, during the gas adsorbing layer forming step, a solution containing the getter material to cover at least one of the first glass pane or the second glass pane to form a coating and solidifying the coating to form the gas absorbing layer.

The present disclosure contributes to making the manufacturing process of glass panel units less troublesome.

### Brief Description of Drawings

FIG. 1 is a schematic plan view of a glass panel unit according to an exemplary embodiment;
FIG. 2 is a schematic cross-sectional view thereof taken along the plane A-A shown in FIG. 1;
FIG. 3A is a photograph, shot with a scanning electron microscope, of a gas adsorbing layer according to the exemplary embodiment;
FIG. 3B is a photograph, shot with a scanning electron microscope at a higher zoom power, of the gas adsorbing layer shown in FIG. 3A;
FIG. 4 is a schematic plan view of a work in progress of a glass panel unit according to the exemplary embodiment;
FIG. 5 is a schematic cross-sectional view thereof taken along the plane B-B shown in FIG. 4;
FIG. 6 is a schematic plan view of a glass panel unit assembly according to the exemplary embodiment;
FIG. 7 illustrates a glass panel unit manufacturing method according to the exemplary embodiment;
FIG. 8 illustrates how to carry out the manufacturing method;
FIG. 9 illustrates how to carry out the manufacturing method;
FIG. 10 illustrates how to carry out the manufacturing method;
FIG. 11 illustrates how to carry out the manufacturing method;
FIG. 12 illustrates how to carry out the manufacturing method;
FIG. 13 illustrates how to carry out the manufacturing method;
FIG. 14 illustrates how to carry out the manufacturing method;
FIG. 15 illustrates how to carry out the manufacturing method;
FIG. 16A illustrates a first variation of the gas adsorbing layer;
FIG. 16B illustrates a second variation of the gas adsorbing layer;
FIG. 16C illustrates a third variation of the gas adsorbing layer;
FIG. 17 illustrates a variation of the assembly; and
FIG. 18 illustrates a variation of the glass panel unit.

### Description of Embodiments

Embodiments of the present disclosure will now be described.

### 1. Embodiments

### 1.1. Overview

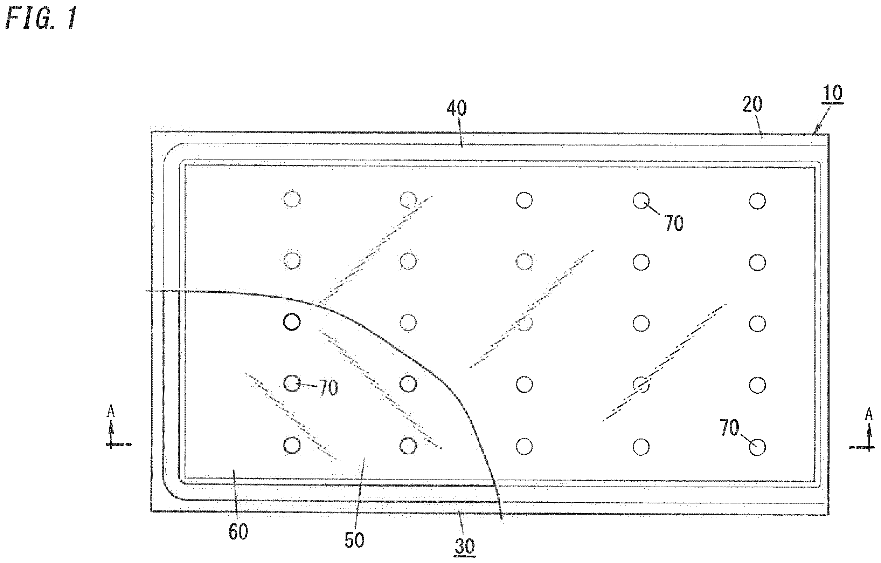

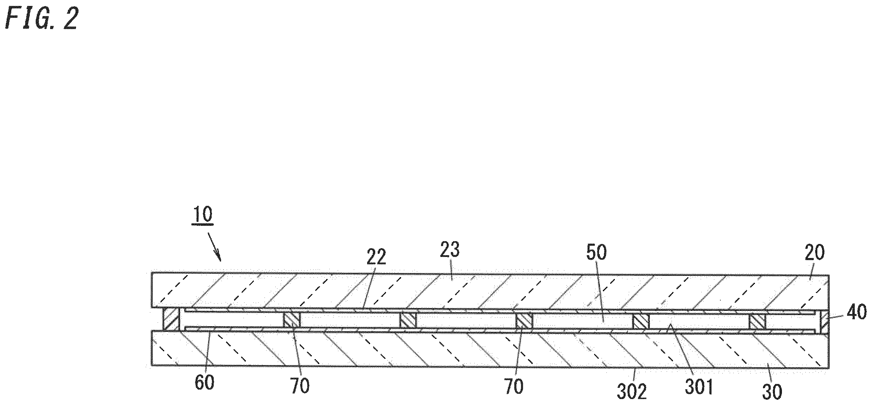

FIGS. 1 and 2 illustrate a glass panel unit (glass panel unit as a final product) 10 according to an exemplary embodiment. The glass panel unit 10 includes a first glass pane 20, a second glass pane 30, a frame member 40, a vacuum space 50, and a gas adsorbing layer 60. The second glass pane 30 is arranged to face the first glass pane 20. The frame member 40 is provided between the first glass pane 20 and the second glass pane 30 to hermetically bond the first and second glass panes 20, 30 together. The vacuum space 50 is surrounded with the first glass pane 20, the second glass pane 30, and the frame member 40. The gas adsorbing layer 60 is provided in the vacuum space 50. The gas adsorbing layer 60 is formed to cover at least one of the first glass pane 20 or the second glass pane 30. The gas adsorbing layer 60 contains a getter material.

In the glass panel unit 10, the gas adsorbing layer 60 covers at least one of the first glass pane 20 or the second glass pane 30 in the vacuum space 50. This makes the gas adsorbing layer 60 less conspicuous on the appearance of the glass panel unit 10. Thus, having the getter material contained in the gas adsorbing layer 60 would make the manufacturing process of the glass panel units 10 less troublesome even when the getter material is provided in the vacuum space 50.

### 1.2. Configuration

The glass panel unit 10 will be described in further detail. The glass panel unit 10 according to this embodiment is a so-called "vacuum insulated glazing unit (or glass unit)." The vacuum insulated glazing unit is a type of multi-pane glazing unit including at least one pair of glass panels and has a vacuum space between the pair of glass panels.

As shown in FIGS. 1 and 2, the glass panel unit 10 includes a pair of glass panes (first and second glass panes) 20, 30, a frame member 40, and a gas adsorbing layer 60. The glass panel unit 10 also has a space (vacuum space) 50 surrounded with the first and second glass panes 20, 30 and the frame member 40. In addition, the glass panel unit 10 further includes a plurality of pillars (spacers) 70 in the vacuum space 50.

Each of the first and second glass panes 20, 30 has a rectangular flat plate shape. The first and second glass panes 20, 30 have the same planar shape.

The first glass pane 20 includes a body 23 and an infrared reflective film 22. The infrared reflective film 22 is provided in the vacuum space 50 and covers the body 23. The infrared reflective film 22 is in contact with the body 23. The infrared reflective film 22 has a light transmitting property but does not transmit an infrared ray easily. Thus, the infrared reflective film 22 improves the thermal insulation property of the glass panel unit 10. The infrared reflective film 22 may be a metallic thin film, for example. The infrared reflective film 22 may contain silver, for example. The infrared reflective film 22 may be configured as a low-E film, for example. The body 23 forms the major shape of the first glass pane 20 and is a rectangular flat plate. Examples of materials for the body 23 include soda lime glass, high strain point glass, chemically tempered glass, alkali-free glass, quartz glass, Neoceram, and thermally tempered glass. The body 23 has the same shape as the second glass pane 30.

Examples of materials for the second glass pane 30 include soda lime glass, high strain point glass, chemically tempered glass, alkali-free glass, quartz glass, Neoceram, and thermally tempered glass. The second glass pane 30 has a first surface 301 and a second surface 302. The first surface 301 is a surface, facing the vacuum space 50, of the second glass pane 30. The second surface 302 is located opposite from the vacuum space 50 with respect to the first surface 301.

The frame member 40 is provided between the first glass pane 20 and the second glass pane 30 to hermetically bond the first glass pane 20 and the second glass pane 30 together, thus forming a space surrounded with the first glass pane 20, the second glass pane 30, and the frame member 40. The space surrounded with the first glass pane 20, the second glass pane 30, and the frame member 40 is the vacuum space 50. The frame member 40 is made of a hot glue (sealing material). In other words, the frame member 40 is a cured hot glue. The hot glue may be a glass frit, for example. The glass frit may be a low-melting grit frit, for example. Examples of the low-melting glass frits include a bismuth-based glass frit, a lead-based glass frit, and a vanadium-based glass frit. The frame member 40, as well as the first and second glass panes 20, 30, has a polygonal (e.g., quadrangular in this embodiment) frame shape. The frame member 40 is formed along the outer periphery of the first and second glass panes 20, 30. The hot glue does not have to be a glass frit but may also be a low-melting metal or a hot-melt adhesive, for example.

The gas adsorbing layer 60 is provided in the vacuum space 50. Specifically, the gas adsorbing layer 60 is formed to cover the first surface 301 almost entirely. More specifically, the gas adsorbing layer 60 is provided to entirely cover a part of the first surface 301, which part constitutes a region spaced by a predetermined gap from the frame member 40. In particular, the gas adsorbing layer 60 has a rectangular planar shape. In addition, the gas adsorbing layer 60 is interposed between the second glass pane 30 and the respective pillars 70. The gas adsorbing layer 60 is in contact with the second glass pane 30. The gas adsorbing layer 60 is used to adsorb an unnecessary gas (such as a residual gas), which may be, for example, a gas emitted from a hot glue that forms the frame member 40 when the hot glue is heated.

Providing the glass panel unit 10 with the gas adsorbing layer 60 allows, even when the vacuum space 50 is narrow, an unnecessary gas in the vacuum space 50 to be adsorbed by the gas adsorbing layer 60. In addition, the gas adsorbing layer 60 is less conspicuous on the appearance of the glass panel unit 10, thus relaxing restriction imposed on the location of the gas adsorbing layer 60 by the shape, size, and other parameters of the vacuum space 50. This contributes to making the manufacturing process of glass panel units 10 less troublesome.

The gas adsorbing layer 60 contains a getter material. The getter material is a material with the property of adsorbing molecules, of which the size is smaller than a predetermined size. The getter material may be an evaporative getter, for example. The evaporative getter has the property of releasing the adsorbed molecules when heated to a predetermined temperature (activation temperature) or more. Thus, even when the adsorption ability of the evaporative getter deteriorates, heating the evaporative getter to the activation temperature or more allows the evaporative getter to recover its adsorption ability. Examples of the evaporative getter include zeolites and metallic-ion-exchanged zeolites (such as a copper-ion-exchanged zeolite). In addition, a metallic-ion-exchanged zeolite is a material in which a metallic ion is held in a zeolite structure. Thus, the metallic-ion-exchanged zeolite allows any specific type of zeolite to be used before a metallic ion is held in the zeolite structure.

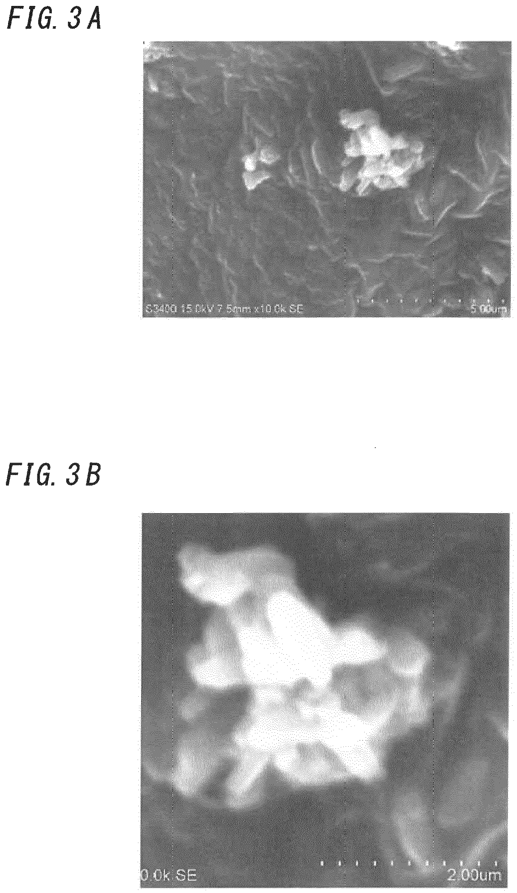

The getter material for use in the gas adsorbing layer 60 is in the shape of a fine powder (hereinafter referred to as a "getter fine power"). The gas adsorbing layer 60 is formed by applying and solidifying a liquid containing the getter fine powder (e.g., a dispersion liquid obtained by dispersing the getter fine powder in a liquid). In the gas adsorbing layer 60, the getter fine powder is aggregated (see FIGS. 3A and 3B). The aggregate of the getter fine powder has a particle shape. The aggregate of the getter fine powder has an arbitrary size. The size of the aggregate is adjustable by dispersing, with ultrasonic waves, the getter fine powder in the liquid containing the getter fine powder. Adjusting the size of the aggregate and the application quantity of the liquid containing the getter fine powder allows the glass panel unit 10 to have either transparent appearance or frosted glass appearance. Thus, any desired appearance may be obtained according to the intended use of the glass panel unit 10. Also, the size of the aggregate may be represented by a particle size greater than 20 µm. This would allow the gas adsorbing layer 60 to easily decrease the light-transmitting property of the glass panel unit 10 to cause the glass panel unit 10 to have frosted glass appearance. According to the present invention, the aggregate has a particle size of 20 µm or less. This would allow the glass panel unit 10 to easily have transparent appearance. The size of the aggregate may be represented by a particle size of 10 µm or more. The size of the aggregate is measured with a scanning electron microscope. The getter fine powder may have an ellipsoidal shape. As used herein, the "ellipsoidal shape" does not have to be the shape of an exact ellipsoid but may also be a shape deformed out of the exact ellipsoid. The ellipsoidal getter fine powder has a major-axis size and a minor-axis size. The major-axis size and minor-axis of the getter fine powder may be measured with a scanning electron microscope. For example, the getter fine powder may have a major-axis size of 1 µm and a minor-axis size of 0.5 µm.

The solution to form the gas adsorbing layer 60 contains not only the getter fine powder but also a solvent. The solvent may be a component to be vaporized away when the gas adsorbing layer 60 is formed. Also, the solvent is a component with a boiling point falling within the range from 100°C to 200°C. Examples of solvents for use to form the gas adsorbing layer 60 include alcohols such as isopropyl alcohol and a mixture of multiple types of alcohols.

The application quantity of the liquid containing the getter fine powder may fall within the range from 0.2 g to 0.3 g, for example, with respect to a target to be coated with a volume of 1 m² (specifically, the first and second glass panes 20, 30). If the specific gravity of the liquid containing the getter fine powder is two, then the coating to be formed by applying 0.3 g of the liquid onto the target to be coated with a volume of 1m² will have a thickness of 0.1 µm. Note that the specific gravity is a ratio with respect to the density of water (1 g/cm³).

The plurality of pillars 70 are arranged in the vacuum space 50. The plurality of pillars 70 is used to maintain a predetermined gap between the first and second glass panes 20, 30. That is to say, the plurality of pillars 70 may be used to maintain a desired gap distance between the first and second glass panes 20, 30. The size, number, interval, and arrangement pattern of the pillars 70 may be selected appropriately. Each of these pillars 70 has the shape of a circular column, of which the height is approximately equal to the predetermined gap. For example, the pillars 70 may have a diameter of 1 mm and a height of 100 µm. Alternatively, the pillars 70 may also have a prismatic, spherical, or any other desired shape.

### 1.3. Manufacturing method

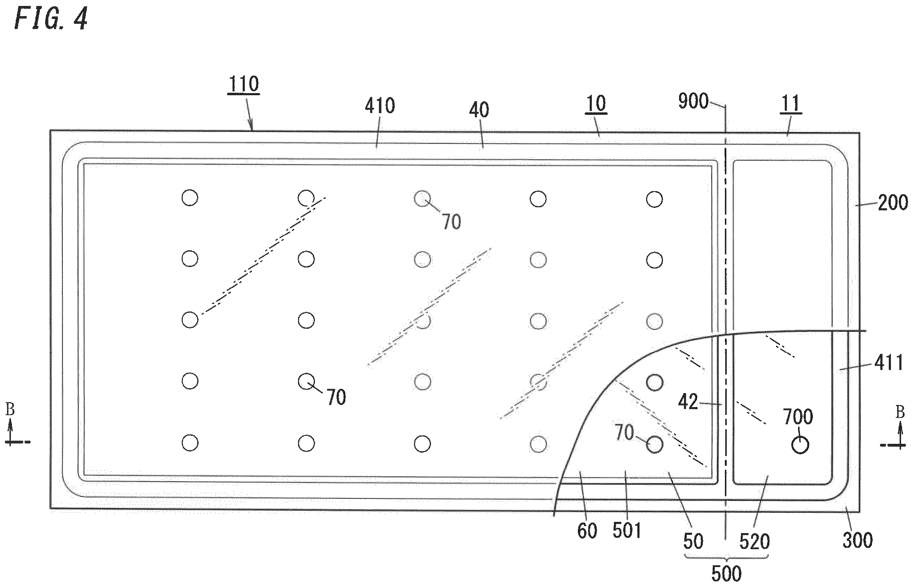

Next, a method for manufacturing the glass panel unit 10 will be described with reference to FIGS. 4-15. The method for manufacturing the glass panel unit 10 includes preparatory steps and a removing step.

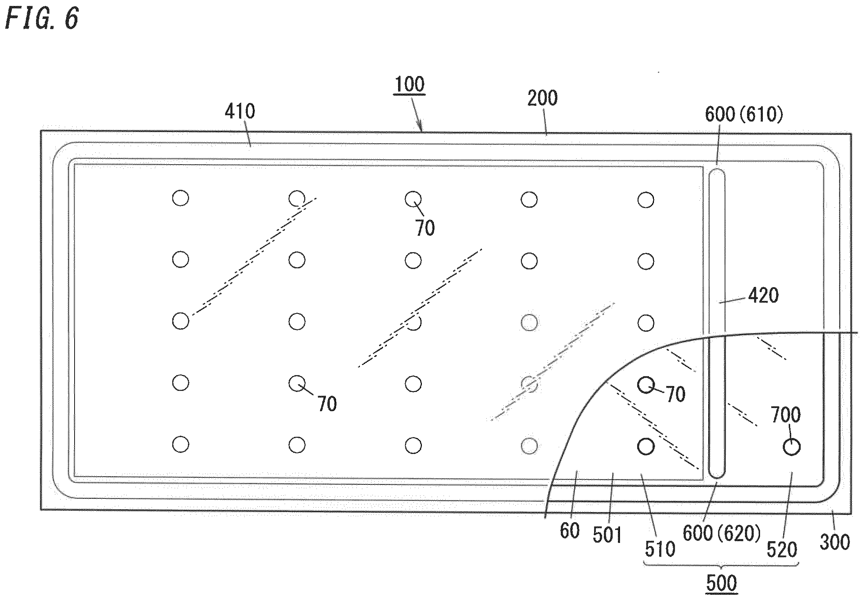

The preparatory steps are steps of providing the work in progress 110 of a glass panel unit shown in FIG. 4. The work in progress 110 is formed out of the glass panel unit assembly 100 shown in FIG. 6.

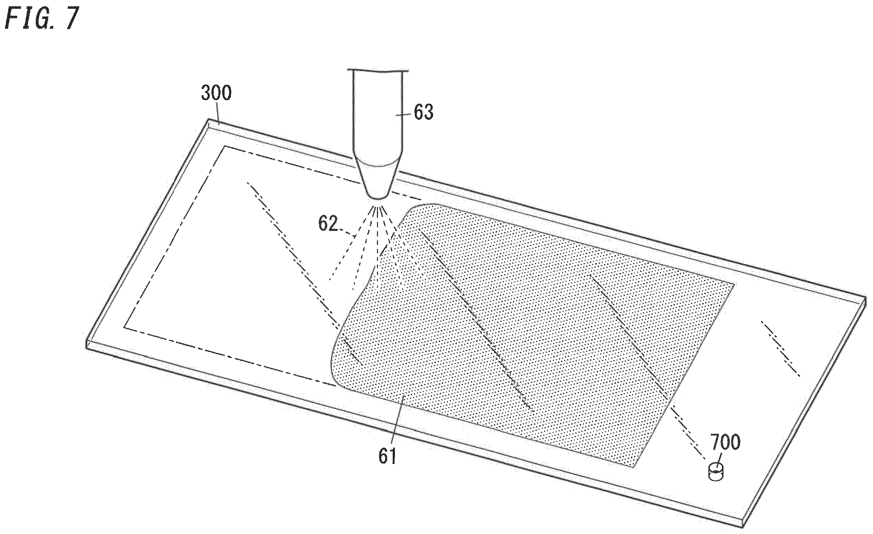

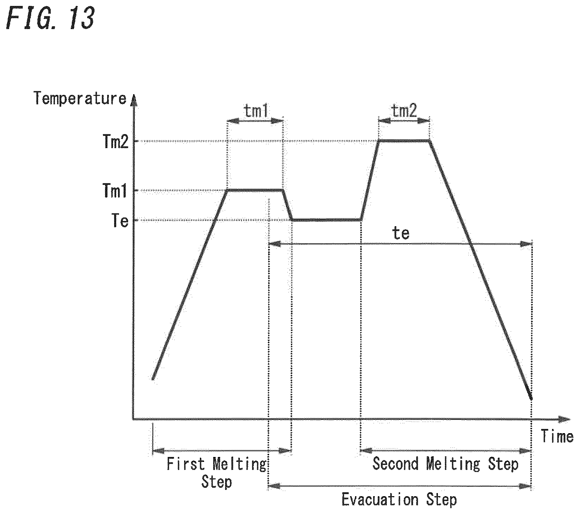

The preparatory steps include an assembling step (see FIGS. 7-12), a first melting step (see FIG. 13), an evacuation step (see FIG. 13), and a second melting step (see FIG. 13).

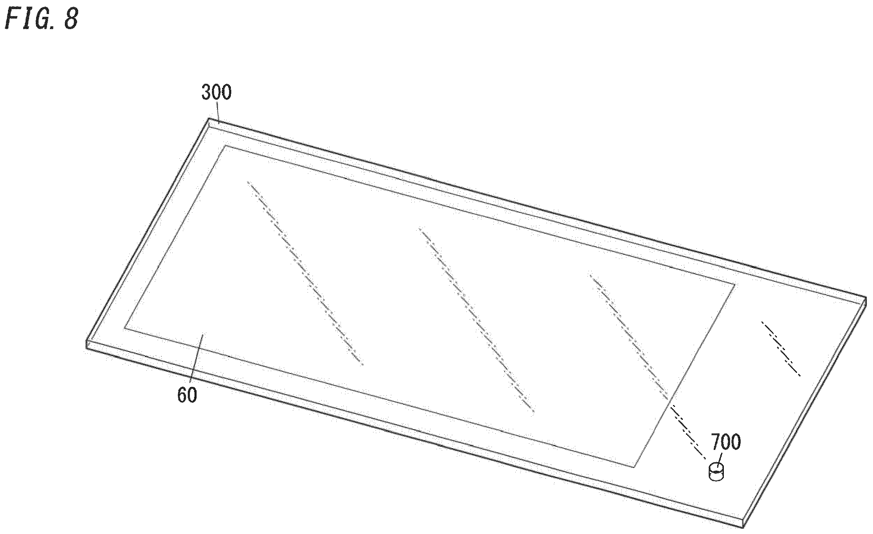

The assembling step is the step of providing the assembly 100. The assembling step includes a gas adsorbing layer forming step (see FIGS. 7 and 8).

As shown in FIG. 6, the assembly 100 includes a pair of glass panes (first and second glass panes) 200, 300, a peripheral wall 410, and a partition 420. The assembly 100 also has an internal space 500 surrounded with the first and second glass panes 200, 300 and the peripheral wall 410. The assembly 100 further includes the gas adsorbing layer 60 and the plurality of pillars (spacers) 70 in the internal space 500. The assembly 100 further has an evacuation port 700.

The gas adsorbing layer forming step is the step of forming the gas adsorbing layer 60 before the first glass pane 200 and the second glass pane 300 are arranged to face each other (i.e., before the sixth step to be described later). In this embodiment, a coating 61 is formed by applying, using a coater 63, a solution 62 containing a getter fine powder and a solvent onto the surface of the second glass pane 300 during the gas adsorbing layer forming step as shown in FIGS. 7 and 8. If the coater 63 is a coater with a spray nozzle, for example, then the solution 62 is applied onto the surface of the second glass pane 300 by being sprayed through a spray nozzle, thereby forming the coating 61. The coater with a spray nozzle may be a spray nozzle, for example.

When the coating 61 is formed, the solution 62 is applied onto the entire surface that constitutes a region spaced from the outer periphery of the second glass pane 300. Then, the coating 61 is solidified to form the gas adsorbing layer 60. Such a gas adsorbing layer 60 is formed in a rectangular shape in a plan view. Also, when the coating 61 is solidified, the solvent in the coating 61 is vaporized away. This allows the gas adsorbing layer 60 to cover a surface region, facing the space 510 surrounded with the peripheral wall 410 and the partition 420, of the second glass pane 300 (see FIG. 6). Examples of solvents to be added to the solution 62 include alcohols such as isopropyl alcohol and a mixture of multiple types of alcohols. Also, the solvent is a component with a boiling point falling within the range from 100°C to 200°C.

Covering the surface region facing the space 510 with the gas adsorbing layer 60 allows, even when the vacuum space 50 formed by evacuating the space 510 in the evacuation step is narrow, an unnecessary gas in the vacuum space 50 to be adsorbed into the gas adsorbing layer 60. In addition, this also makes the gas adsorbing layer 60 less conspicuous, thus relaxing restriction imposed on the location of the gas adsorbing layer 60 by the shape, size, and other parameters of the vacuum space 50. This contributes to making the manufacturing process of glass panel units 10 less troublesome.

In this embodiment, after the gas adsorbing layer forming step has been performed, the peripheral wall 410 and the partition 420 are formed along the outer periphery of the gas adsorbing layer 60 and the pillars 70 are placed on the gas adsorbing layer 60. This allows the pillars 70 to be placed in the space 510.

The peripheral wall 410 includes a first sealant (first hot glue). The peripheral wall 410 is arranged between the first glass pane 200 and the second glass pane 300. The peripheral wall 410 has a frame shape as shown in FIG. 6. In particular, the peripheral wall 410 may have a rectangular frame shape. The peripheral wall 410 is formed along the respective outer peripheries of the first and second glass panes 200, 300. In this manner, in the assembly 100, an internal space 500 is formed to be surrounded with the peripheral wall 410, the first glass pane 200, and the second glass pane 300. Also, the peripheral wall 410 is provided outside of the outer periphery of the gas adsorbing layer 60.

The partition 420 includes a second sealant (second hot glue). The partition 420 is arranged in the internal space 500. The partition 420 is arranged along one side, located close to the evacuation port 700, of the outer periphery of the gas adsorbing layer 60. In addition, the partition 420 partitions the internal space 500 into a predetermined space (evacuation space) 501 and a ventilation space. Specifically, the partition 420 partitions the internal space 500 into a first space 510 serving as the predetermined space 501 and a second space 520. In this case, the second space 520 serves as the ventilation space. Thus, the first space 510 is a space to be evacuated later and the second space 520 is a space used for evacuating the first space 510. The partition 420 is provided closer to a first end (e.g., the right end in FIG. 4) along the length (i.e., the rightward/leftward direction in FIG. 4) of the second glass pane 300 than to the center of the second glass pane 300 such that the first space 510 becomes larger than the second space 520. The partition 420 has the shape of a linear plate extending along the width of the second glass pane 300 (i.e., the upward/downward direction in FIG. 4). Note that both ends along the length of the partition 420 are out of contact with the peripheral wall 410.

The air passage 600 connects the first space 510 and the second space 520 together in the internal space 500 as shown in FIG. 6. The air passage 600 includes a first air passage 610 and a second air passage 620. The first air passage 610 is a gap left between a first end (i.e., the upper end in FIG. 6) of the partition 420 and the peripheral wall 410. The second air passage 620 is a gap left between a second end (i.e., the lower end shown in FIG. 4) of the partition 420 and the peripheral wall 410.

The evacuation port 700 is a hole that allows the second space 520 to communicate with the external environment. The evacuation port 700 is used to evacuate the first space 510 through the second space 520 and the air passages 600 (including the first air passage 610 and the second air passage 620). Thus, the air passages 600, the second space 520, and the evacuation port 700 together form an evacuation path for evacuating the first space 510. The evacuation port 700 is provided through the second glass pane 30 to connect the second space 520 to the external environment. Specifically, the evacuation port 700 is provided at a corner portion of the second glass pane 300.

The first glass pane (first glass substrate) 200 is a member that forms the basis of the first glass pane 20 and is made of the same material as the first glass pane 20. The second glass pane (second glass substrate) 300 is a member that forms the basis of the second glass pane 30 and is made of the same material as the second glass pane 30. The first and second glass panes 200, 300 have the same planar shape and each have a polygonal plate shape (e.g., a rectangular plate shape in this embodiment). In this embodiment, the first glass pane 200 has dimensions that are large enough to form a single first glass pane 20, and the second glass pane 300 has dimensions that are large enough to form a single second glass pane 30.

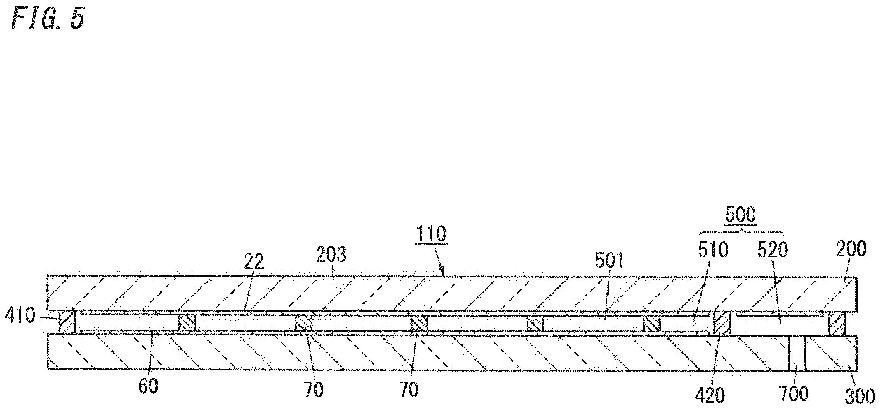

The first glass pane 200 includes a body 203 and an infrared reflective film 22 as shown in FIG. 5. The infrared reflective film 22 is provided in the internal space 500 to cover the body 203. The infrared reflective film 22 is in contact with the body 203. The body 203 has the same plate shape as the second glass pane 300.

The assembling step is the step of forming the first glass pane 200, the second glass pane 300, the peripheral wall 410, the partition 420, the internal space 500, the air passages 600, the evacuation port 700, the gas adsorbing layer 60, and the plurality of pillars 70 to obtain the assembly 100. The assembling step includes not only the gas adsorbing layer forming step but also the following first to fifth steps. Optionally, the order in which the third and fourth steps are performed may be changed as appropriate.

The first step is the step of forming the first glass pane 200 and the second glass pane 300 (i.e., a substrate forming step). For example, the first step includes making the first glass pane 200 and the second glass pane 300. If necessary, the first step may further include cleaning the first glass pane 200 and the second glass pane 300.

The second step is the step of forming the evacuation port 700. The second step includes providing the evacuation port 700 through the second glass pane 300 as shown in FIG. 6. If necessary, the second step may include cleaning the second glass pane 300. In this embodiment, after the second step has been performed, the gas adsorbing layer forming step is performed. After the gas adsorbing layer forming step has been performed, the third to fifth steps are performed.

The third step is the step of forming pillars 70 (i.e., a pillar forming step). The third step includes forming a plurality of pillars 70 in advance and placing, using a chip mounter, for example, the plurality of pillars 70 at predetermined positions on the second glass pane 300. Alternatively, the plurality of pillars 70 may also be formed by photolithographic and etching techniques. In that case, the plurality of pillars 70 may be formed out of a photocurable material, for example. Still alternatively, the plurality of pillars 70 may also be formed by a known thin film forming technique.

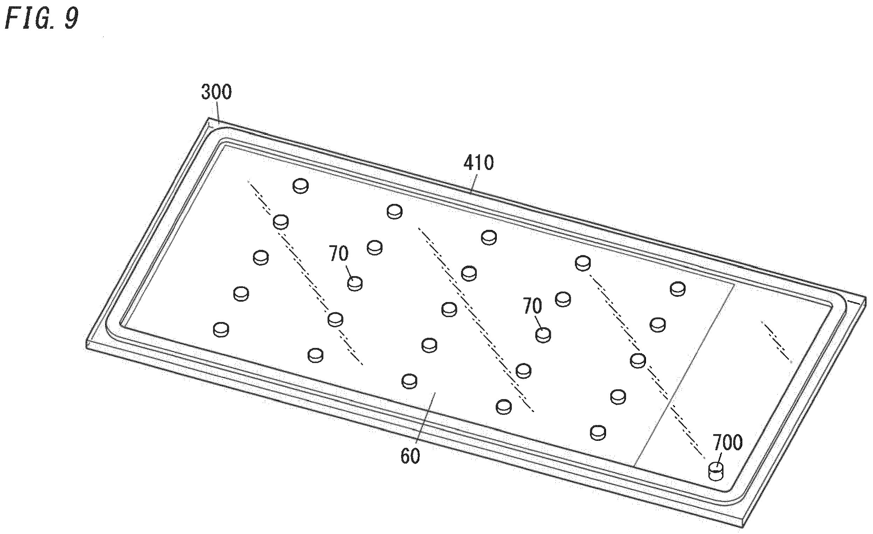

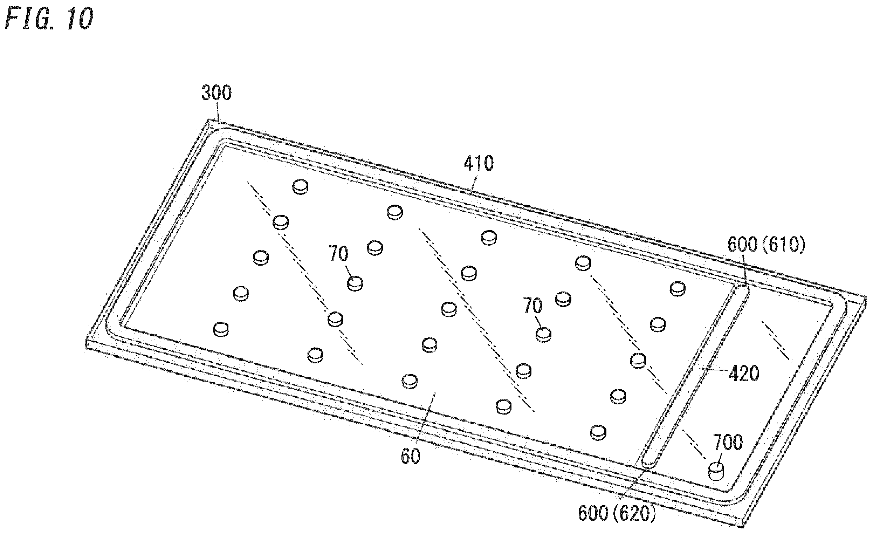

The fourth step is the step of arranging the peripheral wall 410 and the partition 420 along the outer periphery of the gas adsorbing layer 60 (i.e., a sealant arrangement step). Specifically, the fourth step includes applying, using a dispenser, for example, a first sealant outside of the outer periphery of the gas adsorbing layer 60 on the second glass pane 300 and then drying the first sealant to form the peripheral wall 410 (see FIG. 9). In addition, the fourth step also includes applying, using a dispenser, for example, a second sealant outside of the gas adsorbing layer 60 and along one side, located closest to the evacuation port 700, out of the outer periphery of the gas adsorbing layer 60 on the second glass pane 300 and then drying the second sealant to form the partition 420 (see FIG. 10). Optionally, the fourth step may include pre-baking the first and second sealants while drying the first and second sealants. For example, the second glass pane 300 on which the first and second sealants have been applied may be heated at 480°C for 20 minutes. In that case, the first glass pane 200 may also be heated along with the second glass pane 300. That is to say, the first glass pane 200 may be heated under the same condition as the second glass pane 300 (i.e., at 480°C for 20 minutes). This reduces a difference in warpage between the first glass pane 200 and the second glass pane 300.

By performing these first to fourth steps, the second glass pane 300 such as the one shown in FIG. 10 is obtained. On the second glass pane 300, the peripheral wall 410, the partition 420, the air passages 600, the evacuation port 700, the gas adsorbing layer 60, and the plurality of pillars 70 have been formed. In this embodiment, the fifth step is performed after the first to fourth steps have been finished.

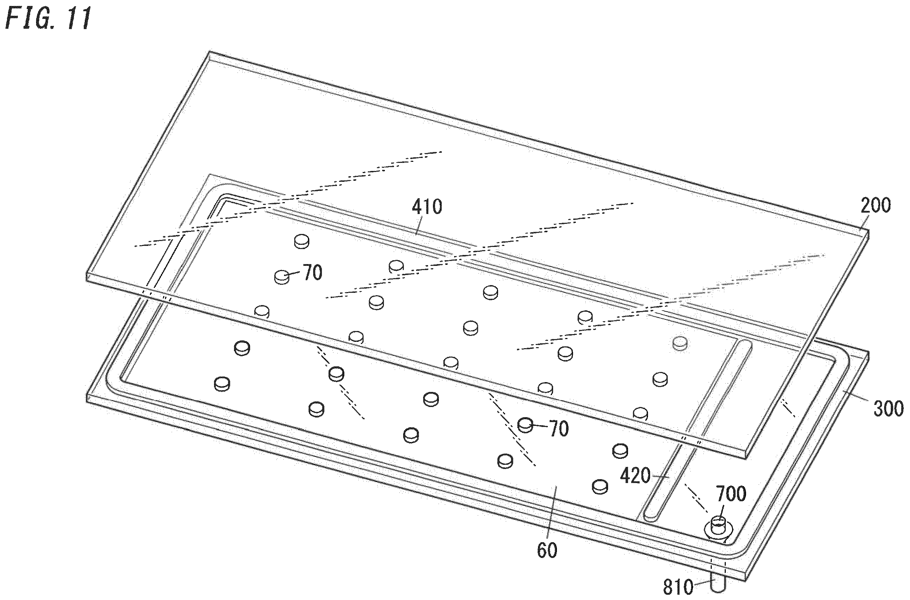

The fifth step is the step of arranging the first glass pane 200 and the second glass pane 300 (arrangement step). The fifth step includes arranging the first glass pane 200 and the second glass pane 300 such that the first glass pane 200 and the second glass pane 300 are parallel to each other and face each other as shown in FIG. 11.

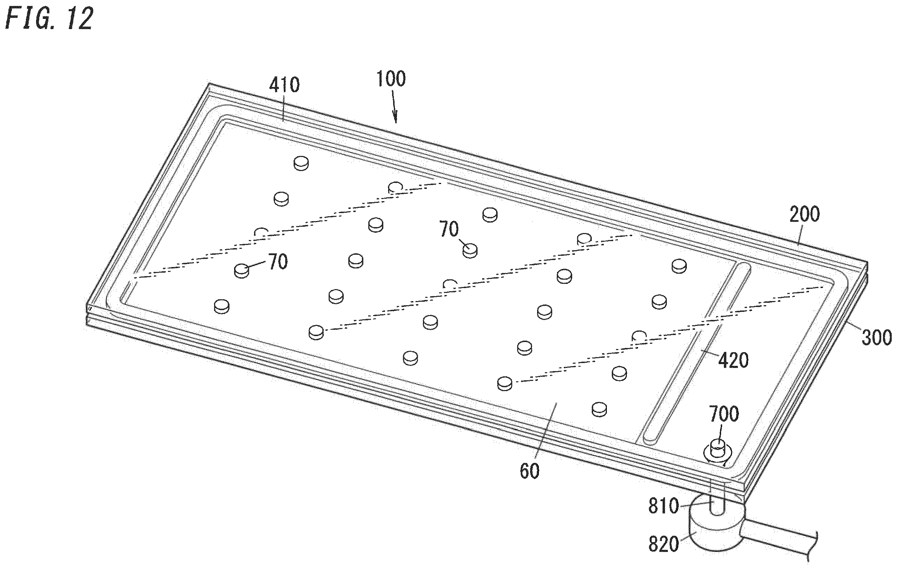

The assembly 100 shown in FIG. 12 is obtained by performing this assembling step. After the assembling step has been performed, the first melting step (bonding step), the evacuation step, and the second melting step (sealing step) are carried out as shown in FIG. 13.

The first melting step is the step of melting the peripheral wall 410 once to hermetically bond the first and second glass panes 200, 300 together with the peripheral wall 410. Specifically, the first glass pane 200 and the second glass pane 300 are loaded into a melting furnace and heated at a first melting temperature Tm1 for a predetermined amount of time (first melting time) tm1 (see FIG. 13). The melting temperature Tm1 is set at a temperature equal to or higher than a first softening point of the first sealant but lower than a second softening point of the second sealant. This prevents the partition 420 from being deformed to close the air passage 600. For example, if the first softening point is 434°C and the second softening point is 454°C, the first melting temperature Tm1 is set at 440°C. The first melting time tm1 may be 10 minutes, for example.

In this case, the first melting temperature Tm1 is suitably closer to the second softening point than to the first softening point. This allows the peripheral wall 410 to be further softened with the deformation of the partition 420 reduced. This enables, even when the first and second glass panes 200, 300 have warpage, the first and second glass panes 200, 300 to be hermetically bonded together with the peripheral wall 410.

The evacuation step is the step of evacuating the first space 510 through the air passages 600, the second space 520, and the evacuation port 700 and thereby turning the first space 510 into a vacuum space 50. The evacuation may be carried out using a vacuum pump, for example. The vacuum pump may be connected to the assembly 100 via an evacuation pipe 810 and a sealing head 820 as shown in FIG. 12. The evacuation pipe 810 may be bonded to the second glass pane 300 such that the inside of the evacuation pipe 810 and the evacuation port 700 communicate with each other, for example. Then, the sealing head 820 is attached to the evacuation pipe 810, thereby connecting a suction port of the vacuum pump to the evacuation port 700. The first melting step, the evacuation step, and the second melting step are performed with the assembly 100 kept loaded in the melting furnace. Therefore, the evacuation pipe 810 is bonded to the second glass pane 300 at least before the first melting step.

The evacuation step includes starting evacuating the first space 510 at a temperature equal to or higher than an evacuation temperature Te before the second melting step is started, and keeping evacuating the first space 510 for at least a predetermined amount of time (evacuation time) te, via the air passages 600, the second space 520, and the evacuation port 700 (see FIG. 13). The evacuation temperature Te is set at a temperature higher than the activation temperature (e.g., 350°C) of the getter material (getter fine powder) of the gas adsorbing layer 60 but lower than the second softening point (e.g., 454°C) of the second sealant. The evacuation temperature Te may be 390°C, for example. This prevents the partition 420 from being deformed. In addition, this causes the getter material of the gas adsorbing layer 60 to be activated and also causes the molecules (gas) adsorbed onto the getter material to be released from the getter. Then, the molecules (i.e., the gas) released from the getter material are exhausted through the first space 510, the air passages 600, the second space 520, and the evacuation port 700. Thus, this evacuation step allows the gas adsorbing layer 60 to recover their adsorption ability. The evacuation time te is set to create a vacuum space 50 with a predetermined degree of vacuum (e.g., a degree of vacuum of 0.1 Pa or less). The evacuation time te may be set at 120 minutes, for example.

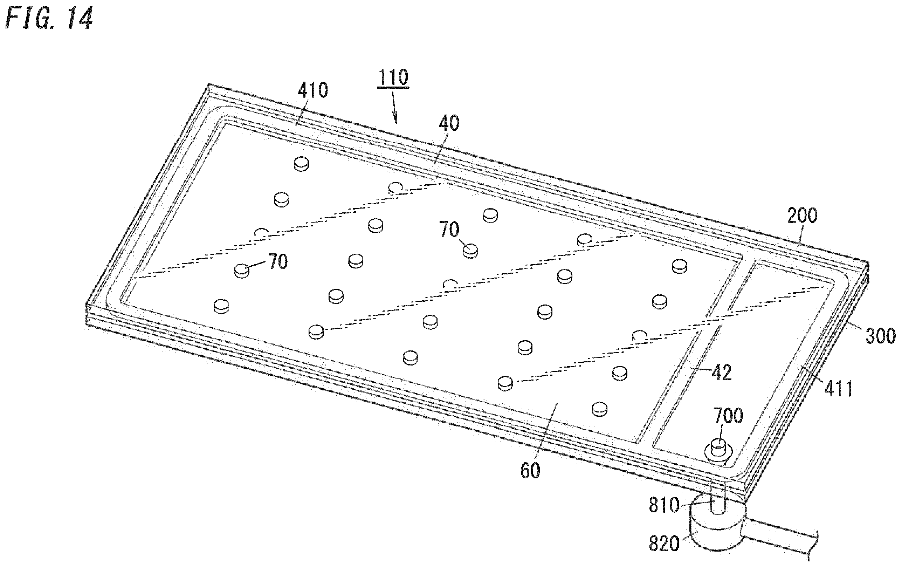

The second melting step is the step of closing at least the air passages 600 by deforming the partition 420 to obtain the work in progress 110. That is to say, the second melting step includes closing the air passages 600 by deforming the partition 420. In other words, the first space 510 is closed with the deformed partition 420, thereby separating the first space 510 and the second space 520 from each other. In this manner, a frame member 40 is formed to surround the vacuum space 50 (see FIG. 14). In this embodiment, the partition 420 is deformed such that both longitudinal ends of the partition 420 contact with, and join to, the peripheral wall 410. As a result, a boundary wall 42 that hermetically separates the internal space 500 into the first space 510 (vacuum space 50) and the second space 520 is formed as shown in FIGS. 4 and 14. More specifically, melting the partition 420 once at a predetermined temperature (second melting temperature) Tm2 equal to or higher than the second softening point of the second sealant causes the partition 420 to be deformed. Specifically, the first glass pane 200 and the second glass pane 300 are heated in the melting furnace at a second melting temperature Tm2 for a predetermined amount of time (second melting time) tm2 (see FIG. 13). The second melting temperature Tm2 and the second melting time tm2 are set such that the partition 420 is softened to close the air passages 600. The lower limit of the second melting temperature Tm2 is the second softening point (e.g., 454°C). The second melting temperature Tm2 may be set at 460°C, for example. Also, the second melting time tm2 may be 30 minutes, for example.

In this embodiment, the evacuation step starts halfway through the first melting step and ends when the second melting step ends as shown in FIG. 13. Thus, in the first melting step, the first space 510 is also evacuated through the air passages 600, the second space 520, and evacuation port 700. This creates a pressure difference between the inside and outside of the assembly 100. This pressure difference causes the first and second glass panes 200, 300 to move toward each other. This facilitates, even when the first and second glass panes 200, 300 have warpage, hermetically bonding the first and second glass panes 200, 300 together with the peripheral wall 410. In addition, in the second melting step, the evacuation step is performed continuously. Thus, the first space 510 is still evacuated through the air passages 600, the second space 520, and the evacuation port 700. That is to say, the second melting step includes forming the boundary wall 42 that closes the air passages 600 by deforming the partition 420 at the second melting temperature Tm2 while evacuating the first space 510 via the air passages 600, the second space 520, and the evacuation port 700. This further reduces the chances of the degree of vacuum in the vacuum space 50 decreasing during the second melting step. Nevertheless, in the first and second melting steps, the first space 510 does not have to be evacuated through the air passages 600, the second space 520, and the evacuation port 700.

By performing these preparatory steps, the work in progress 110 shown in FIG. 4 is obtained. The work in progress 1111 includes the first glass pane 200, the second glass pane 300, the peripheral wall 410, and the boundary wall 42 as shown in FIGS. 4 and 14. The work in progress 1111 also has the vacuum space 50 and the second space 520. The work in progress 110 further includes the gas adsorbing layer 60 and the plurality of pillars (spacers) 70 in the vacuum space 50. The work in progress 1111 further has the evacuation port 700.

The boundary wall 42 (spatially) separates the vacuum space 50 and the second space 520 from each other. In other words, the second space 520 of the work in progress 110 (spatially) communicates with the external environment via the evacuation port 700, and therefore, the boundary wall 42 separates the vacuum space 50 and the external environment from each other. In addition, the boundary wall 42 and the peripheral wall 410 together form the frame member 40 that surrounds the vacuum space 50. The frame member 40 not only surrounds the vacuum space 50 entirely but also hermetically bonds the first and second glass panes 200, 300 together.

The vacuum space 50 is formed by evacuating the first space 510 through the second space 520 and the evacuation port 700 as described above. In other words, the vacuum space 50 is the first space 510 having a degree of vacuum equal to or less than a predetermined value. The predetermined value may be 0.1 Pa, for example. The vacuum space 50 is perfectly sealed hermetically by the first glass pane 200, the second glass pane 300, and the frame member 40, and therefore, is separated from the second space 520 and the evacuation port 700.

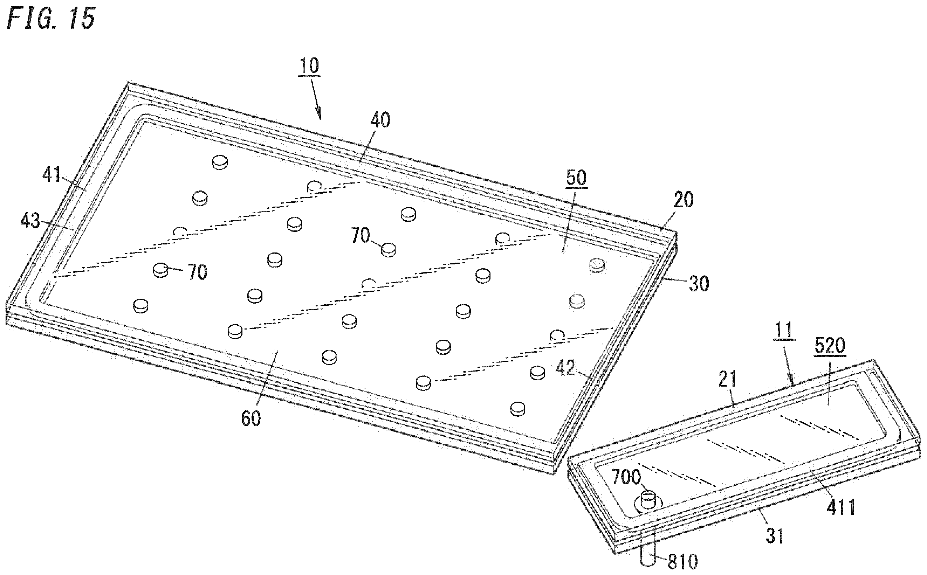

The removing step is performed after the preparatory steps have been performed. The removing step is the step of obtaining a glass panel unit 10 as a part including the vacuum space 50 by removing a part 11 including the second space 520 from the work in progress 110 as shown in FIG. 15.

The glass panel unit 10 includes the first glass pane 20, the second glass pane 30, the frame member 40, the gas adsorbing layer 60, and the plurality of pillars 70 as described above. The first glass pane 20 is a part, facing the first space 510 (i.e., the vacuum space 50), of the first glass pane 200. The second glass pane 30 is a part, facing the first space 510 (i.e., the vacuum space 50), of the second glass pane 300. The gas adsorbing layer 60 covers the entire surface region, spaced from the frame member 40 in the vacuum space 50, of the second glass pane 300.

On the other hand, the unnecessary part 11 includes a part 21, facing the second space 520, of the first glass pane 200 and a part 31, facing the second space 520, of the second glass pane 300. The unnecessary part 11 further includes a part 411, facing the second space 520, of the peripheral wall 410. Note that considering the manufacturing cost of the glass panel unit 10, the unnecessary part 11 is suitably as small as possible.

Specifically, in the removing step, the work in progress 110 unloaded from the melting furnace is cut off along the cutting line 900 shown in FIG. 4 to be divided into a predetermined part (glass panel unit) 10 having the vacuum space 50 and a part (unnecessary part) 11 having the second space 520. Note that the shape of the cutting line 900 is determined by the shape of the glass panel unit 10. Since the glass panel unit 10 has a rectangular shape, the cutting line 900 has a linear shape aligned with the length of the boundary wall 42. In particular, in this embodiment, the cutting line 900 passes over the boundary wall 42. Specifically, the cutting line 900 passes through the middle of the width of the boundary wall 42 and extends along the length of the boundary wall 42. That is to say, in the removing step, the boundary wall 42 is split along the width thereof into two parts, one of which forms part of the frame member 40 of the glass panel unit 10 and the other of which is removed along with the unnecessary part 11. Note that the cutting line 900 does not have to pass over the boundary wall 42. For example, if the cutting line 900 passes between the boundary wall 42 and the evacuation port 700, then a glass panel unit 10 with no evacuation ports 700 is obtained. However, drawing the cutting line 900 over the boundary wall 42 allows the first and second glass panes 200, 300 to be cut off along with the boundary wall 42, thus achieving the advantage of facilitating cutting off the work in progress 110.

The glass panel unit 10 shown in FIGS. 1 and 2 is obtained through the preparatory steps and removing step described above.

### 2. Variations

Note that the embodiment described above is only an example of the present disclosure and should not be construed as limiting. Rather, the embodiment may be readily modified in various manners depending on a design choice or any other factor without departing from the scope of the present disclosure. Next, variations of the embodiment described above will be enumerated one after another.

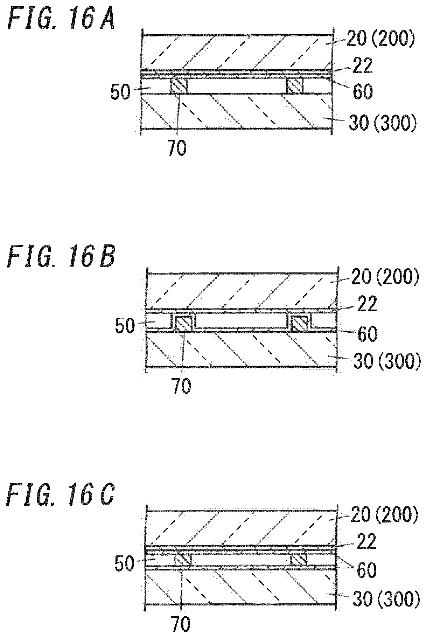

In the embodiment described above, the gas adsorbing layer 60 is formed on the second glass pane 30. However, this is only an example of the present disclosure and should not be construed as limiting. Alternatively, the gas adsorbing layer 60 may cover the surface, facing the vacuum space 50, of the first glass pane 20 as shown in FIG. 16A. Specifically, the gas adsorbing layer 60 may cover the infrared reflective film 22 in the vacuum space 50. Such a gas adsorbing layer 60 is formed, in the gas adsorbing layer forming step, over the entire surface constituting the region spaced from the outer periphery of the first glass pane 200. In another variation, the gas adsorbing layer 60 may cover the surface, facing the vacuum space 50, of the second glass pane 30 and the pillars 70 as shown in FIG. 16B. Such a gas adsorbing layer 60 is not interposed between the second glass pane 30 and the pillars 70. To form the gas adsorbing layer 60 shown in FIG. 16B, the gas adsorbing layer forming step is performed after the third step and before the sixth step. In still another variation, the glass panel unit 10 may include at least two gas adsorbing layers 60. These gas adsorbing layers 60 cover the surface, facing the vacuum space 50, of the first glass pane 20 and the surface, facing the vacuum space 50, of the second glass pane 30 as shown in FIG. 16C. In that case, the gas adsorbing layer 60 covering the first glass pane 20 is interposed between the first glass pane 20 and the pillars 70. In addition, the gas adsorbing layer 60 covering the second glass pane 30 is interposed between the second glass pane 30 and the pillars 70. The gas adsorbing layers 60 shown in FIG. 16C are formed, in the gas adsorbing layer forming step, over the entire surface constituting the region spaced from the outer periphery of the first glass pane 200 and the entire surface constituting the region spaced from the outer periphery of the second glass pane 300, respectively.

In the embodiment described above, the evacuation step ends when the second melting step ends. Alternatively, the evacuation step may start after the first melting step has finished and may end before the second melting step ends. Nevertheless, the advantages described above are achieved by performing the evacuation step in parallel with the first melting step and the second melting step.

In the embodiment described above, the glass panel unit 10 has a rectangular shape. However, this is only an example and should not be construed as limiting. Alternatively, the glass panel unit 10 may also have a circular, polygonal, or any other desired shape. That is to say, the first glass pane 20, the second glass pane 30, the gas adsorbing layer 60, and the frame member 40 do not have to be rectangular but may also have a circular, polygonal, or any other desired shape. In addition, the respective shapes of the first glass pane 200, the second glass pane 300, the peripheral wall 410, and the partition 420 do not have to be the ones used in the embodiment described above, but may also be any other shapes that allow glass panel unit 10 of a desired shape to be obtained. Note that the shape and dimensions of the glass panel unit 10 may be determined according to the intended use of the glass panel unit 10.

The first and second glass panes 20, 30 does not have to have the same planar shape and planar dimensions. The body 23 of the first glass pane 20 does not have to have the same thickness as the second glass pane 30, either. In addition, the body 23 and the second glass pane 30 do not have to be made of the same material, either. The same statement applies to the first and second glass panes 200, 300 as well.

The peripheral wall 410 does not have to have the same planar shape as the first and second glass panes 200, 300.

Optionally, the peripheral wall 410 may include not only the first sealant but also any other element such as a core material. The partition 420 (boundary wall 42) may include not only the second sealant but also any other element such as a core material.

Also, in the assembly 100, the peripheral wall 410 is just provided between the first and second glass panes 200, 300 and does not bond the first and second glass panes 200, 300 together. Optionally, however, in the assembly 100 stage, the peripheral wall 410 may bond the first and second glass panes 200, 300 together. In short, in the assembly 100, the peripheral wall 410 needs to be provided between the first and second glass panes 200, 300 and does not have to bond the first and second glass panes 200, 300 together.

Furthermore, in the embodiment described above, the partition 420 is out of contact with the peripheral wall 410. This allows air passages 610, 620 to be formed in the respective gaps between both ends of the partition 420 and the peripheral wall 410. However, this is only an example and should not be construed as limiting. Alternatively, only one of the two ends of the partition 420 may be coupled to the peripheral wall 410. In that case, a single air passage 600 is formed between the partition 420 and the peripheral wall 410. Still alternatively, the partition 420 may even have both ends thereof coupled to the peripheral wall 410. In that case, the air passage 600 may be a through hole provided through the partition 420. Alternatively, the air passage 600 may be the gap between the partition 420 and the first glass pane 200. Still alternatively, the partition 420 may be made up of two or more partitions arranged at intervals. In that case, the air passage 600 may be the gap between the two or more partitions.

Furthermore, in the embodiment described above, the internal space 500 is partitioned into the single first space 510 and the single second space 520. However, this is only an example and should not be construed as limiting. Alternatively, the internal space 500 may also be partitioned by the partition 420 into one or more first spaces 510 and one or more second spaces 520. When the internal space 500 has two or more first spaces 510, two or more glass panel units10 may be obtained from a single work in progress 110.

In the embodiment described above, a melting furnace is used to heat the peripheral wall 410, the gas adsorbing layer 60, and the partition 420. However, heating may be conducted by any appropriate heating means. The heating means may be a laser beam or a heat transfer plate connected to a heat source, for example.

In the embodiment described above, the air passages 600 include the two air passages 610, 620. Alternatively, only one air passage 600 may be provided or the air passages 600 may include three or more air passages. Furthermore, the air passages 600 may have any shape without limitation.

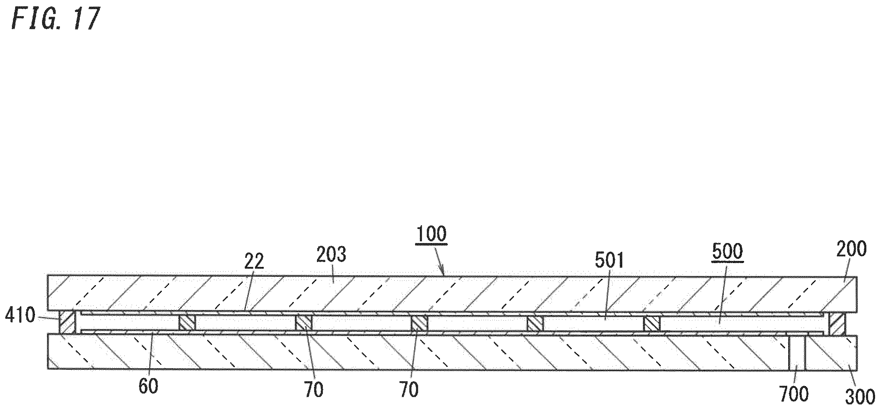

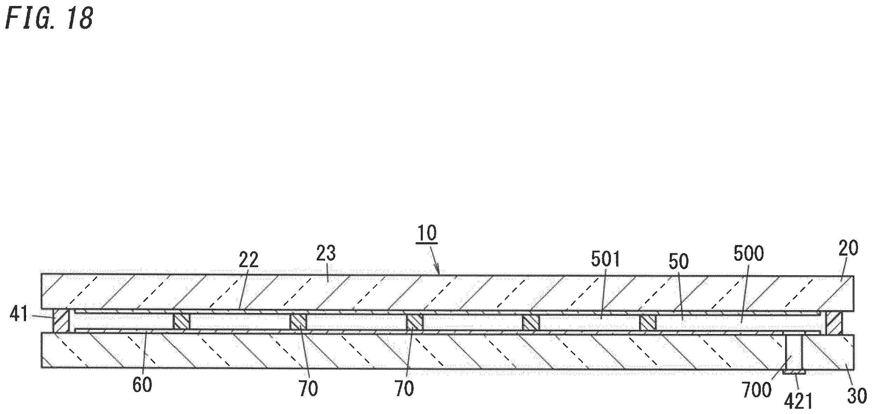

In the embodiment described above, the assembly 100 includes the partition 420. However, the assembly 100 does not have to include the partition 420 (see FIG. 17). In that case, the gas adsorbing layer 60 covers almost the entire surface, facing the internal space 500, of the second glass pane 300. A glass panel unit 10 such as the one shown in FIG. 18 is obtained by using the assembly 100 according to such a variation. In this glass panel unit 10, the evacuation port 700 is closed with a sealing portion 421. In this case, the first glass pane 20 has the same dimensions and the same thickness as the first glass pane 200, and the second glass pane 30 has the same dimensions and the same thickness as the second glass pane 300. To make the glass panel unit 10 shown in FIG. 18, after the peripheral wall 410 has been melted, the internal space 500 is evacuated through the evacuation port 700. Thereafter, the evacuation port 700 is closed with the sealing portion 421 to turn the internal space 500 evacuated into a vacuum space 50. That is to say, the entire internal space 500 evacuated constitutes the predetermined space 501. Closing the evacuation port 700 with the sealing portion 421 allows the predetermined space 501 (i.e., the vacuum space 50) to be separated from the external environment. To close the evacuation port 700, the sealing step is started when the evacuation step is finished. In the sealing step, the sealing portion 421 may be formed by thermally fusing and bonding the glass as a constituent material of the evacuation pipe 810, for example.

In the embodiment described above, the evacuation port 700 is provided through the second glass pane 300. However, this is only an example and should not be construed as limiting. Alternatively, the evacuation port 700 may be provided through the first glass pane 200 or may also be provided through the part 411, facing the second space 520, of the peripheral wall 410. In short, the evacuation port 700 just needs to be provided for the unnecessary part 11.

In the embodiment described above, the getter material in the gas adsorbing layer 60 is an evaporative getter. Alternatively, the getter material may also be a non-evaporative getter.

In the embodiment described above, the first space 510 is the vacuum space 50. However, the vacuum space 50 may be replaced with a pressure-reduced space. The pressure-reduced space is the first space 510 in a pressure-reduced condition. As used herein, the "pressure reduced condition" refers to a condition in which the pressure is lower than the atmospheric pressure.

### Reference

### Signs List

- 10: Glass Panel Unit
- 100: Assembly
- 110: Work in Progress
- 20, 30: Glass Pane
- 200, 300: Glass Pane
- 22: Infrared Reflective Film
- 23: Body
- 40: Frame Member
- 410: Peripheral Wall
- 420: Partition
- 50: Vacuum Space
- 500: Internal Space
- 501: Predetermined Space
- 510: First Space
- 520: Second Space
- 60: Gas Adsorbing Layer
- 61: Coating
- 62: Solution
- 600: Air Passage
- 700: Evacuation Port

## Claims

1. A glass panel unit comprising:
a first glass pane;
a second glass pane arranged to face the first glass pane;
a frame member provided between the first glass pane and the second glass pane to hermetically bond the first and second glass panes together;
a vacuum space surrounded with the first glass pane, the second glass pane, and the frame member; and
a gas adsorbing layer provided in the vacuum space, formed to cover at least one of the first glass pane or the second glass pane, and containing a getter material,
the getter material in the gas adsorbing layer being in a shape of an aggregate of a getter fine powder,
a size of the aggregate being represented by a particle size of 20 µm or less.

2. The glass panel unit of claim 1, wherein
the getter material contains a copper-ion-exchanged zeolite.

3. The glass panel unit of claim 1 or 2, wherein
the first glass pane includes a body thereof and an infrared reflective film provided in the vacuum space to cover the body.

4. The glass panel unit of any one of claims 1 to 3, wherein
the gas adsorbing layer is formed on the second glass pane.

5. A method for manufacturing a glass panel unit, the method comprising an assembling step, an evacuation step, and a sealing step,
the assembling step including providing an assembly,
the assembly including:
a first glass pane;
a second glass pane arranged to face the first glass pane;
a frame-shaped peripheral wall provided between the first glass pane and the second glass pane;
an internal space surrounded with the first glass pane, the second glass pane, and the peripheral wall;
a gas adsorbing layer provided in the internal space, formed on at least one of the first glass pane or the second glass pane, and containing a getter material; and
an evacuation port allowing the internal space to communicate with an external environment,
the evacuation step including evacuating the internal space through the evacuation port,
the sealing step including closing a predetermined space out of the internal space to separate the predetermined space from the external environment,
the assembling step including the step of forming the gas adsorbing layer before the first glass pane and the second glass pane are arranged to face each other,
the method including applying, during the step of forming the gas adsorbing layer, a solution containing the getter material to cover at least one of the first glass pane or the second glass pane to form a coating and solidifying the coating to form the gas adsorbing layer,
the getter material in the gas adsorbing layer being in a shape of an aggregate of a getter fine powder,
a size of the aggregate being represented by a particle size of 20 µm or less.

6. The method of claim 5, wherein
the evacuation step includes evacuating the internal space and activating the getter material while heating the internal space.

7. The method of claim 5 or 6, wherein
the assembly further includes a partition and an air passage,
the partition is provided to partition the internal space into a first space serving as the predetermined space and a second space, and
the air passage connects the first space and the second space together.

8. The method of claim 7, wherein
the sealing step includes heating and thereby deforming the partition to close the air passage up.

9. The method of any one of claims 5 to 8, comprising forming the gas adsorbing layer on the second glass pane.

## Patentansprüche

1. Glasplatteneinheit, umfassend:
eine erste Glasscheibe;
eine zweite Glasscheibe, angeordnet gegenüber der ersten Glasscheibe;
ein Rahmenelement, vorgesehen zwischen der ersten Glasscheibe und der zweiten Glasscheibe, um die erste und zweite Glasscheibe hermetisch miteinander zu verbinden;
einen Vakuumraum, umgeben von der ersten Glasscheibe, der zweiten Glasscheibe und dem Rahmenelement; und
eine gasadsorbierende Schicht, vorgesehen im Vakuumraum, ausgebildet, um mindestens eine der ersten oder zweiten Glasscheiben zu bedecken, und ein Gettermaterial enthaltend,
wobei das Gettermaterial in der gasadsorbierenden Schicht in Form eines Aggregats eines Getterfeinpulvers vorliegt,
wobei eine Größe des Aggregats durch eine Teilchengröße von 20 µm oder weniger dargestellt ist.

2. Glasplatteneinheit nach Anspruch 1, wobei
das Gettermaterial ein kupferionenausgetauschtes Zeolith enthält.

3. Glasplatteneinheit nach Anspruch 1 oder 2, wobei
die erste Glasscheibe einen Körper derselben und eine infrarotreflektierende Schicht umfasst, die im Vakuumraum vorgesehen ist, um den Körper zu bedecken.

4. Glasplatteneinheit nach einem der Ansprüche 1 bis 3, wobei die gasadsorbierende Schicht auf der zweiten Glasscheibe ausgebildet ist.

5. Verfahren zur Herstellung einer Glasplatteneinheit, umfassend einen Montageschritt, einen Evakuierungsschritt und einen Versiegelungsschritt,
wobei der Montageschritt das Bereitstellen einer Baugruppe umfasst,
wobei die Baugruppe umfasst:
eine erste Glasscheibe;
eine zweite Glasscheibe, angeordnet gegenüber der ersten Glasscheibe;
eine rahmenförmige Umfangswand, vorgesehen zwischen der ersten und der zweiten Glasscheibe;
einen Innenraum, umgeben von der ersten Glasscheibe, der zweiten Glasscheibe und der Umfangswand;
eine gasadsorbierende Schicht, vorgesehen im Innenraum, ausgebildet auf mindestens einer der ersten oder zweiten Glasscheiben und ein Gettermaterial enthaltend; und
eine Evakuierungsöffnung, die es dem Innenraum erlaubt mit einer äußeren Umgebung zu kommunizieren,
wobei der Evakuierungsschritt das Evakuieren des Innenraums durch die Evakuierungsöffnung umfasst,
wobei der Versiegelungsschritt das Verschließen eines vorbestimmten Raums aus dem Innenraum umfasst, um den vorbestimmten Raum von der äußeren Umgebung zu trennen,
wobei der Montageschritt den Schritt des Ausbildens der gasadsorbierenden Schicht umfasst, bevor die erste und zweite Glasscheibe einander gegenüber angeordnet werden,
wobei das Verfahren während des Schritts des Ausbildens der gasadsorbierenden Schicht das Auftragen einer Lösung, die das Gettermaterial enthält, umfasst, um mindestens eine der ersten oder zweiten Glasscheiben zu bedecken, um eine Beschichtung zu bilden, und das Verfestigen der Beschichtung zur Bildung der gasadsorbierenden Schicht umfasst,
wobei das Gettermaterial in der gasadsorbierenden Schicht in Form eines Aggregats eines Getterfeinpulvers vorliegt,
wobei eine Größe des Aggregats durch eine Teilchengröße von 20 µm oder weniger dargestellt ist.

6. Verfahren nach Anspruch 5, wobei
der Evakuierungsschritt das Evakuieren des Innenraums und das Aktivieren des Gettermaterials unter Erwärmen des Innenraums umfasst.

7. Verfahren nach Anspruch 5 oder 6, wobei
die Baugruppe weiter eine Trennwand und einen Luftkanal umfasst,
wobei die Trennwand vorgesehen ist, um den Innenraum in einen ersten Raum, der als der vorbestimmte Raum dient, und einen zweiten Raum zu unterteilen, und
wobei der Luftkanal den ersten Raum und den zweiten Raum miteinander verbindet.

8. Verfahren nach Anspruch 7, wobei
der Versiegelungsschritt das Erwärmen und dadurch Verformen der Trennwand umfasst, um den Luftkanal zu verschließen.

9. Verfahren nach einem der Ansprüche 5 bis 8, umfassend das Ausbilden der gasadsorbierenden Schicht auf der zweiten Glasscheibe.

## Revendications

1. Unité de panneau de verre comprenant :
une première vitre ;
une seconde vitre agencée pour faire face à la première vitre ;
un élément de cadre prévu entre la première vitre et la seconde vitre pour assembler hermétiquement les première et seconde vitres ensemble ;
un espace sous vide entouré de la première vitre, la seconde vitre et l'élément de cadre ; et
une couche adsorbant du gaz prévue dans l'espace sous vide, formée pour recouvrir au moins une de la première vitre ou la seconde vitre, et contenant un matériau sorbeur,
le matériau sorbeur dans la couche adsorbant du gaz étant sous une forme d'un agrégat d'une poudre fine de sorbeur,
une taille de l'agrégat étant représentée par une taille particulaire de 20 µm ou moins.

2. Unité de panneau de verre selon la revendication 1, dans laquelle le matériau sorbeur contient une zéolithe échangeuse d'ions cuivre.

3. Unité de panneau de verre selon la revendication 1 ou 2, dans laquelle la première vitre inclut un corps de celle-ci et un film réfléchissant infrarouge prévu dans l'espace sous vide pour recouvrir le corps.

4. Unité de panneau de verre selon l'une quelconque des revendications 1 à 3, dans laquelle
la couche adsorbant du gaz est formée sur la seconde vitre.

5. Procédé de fabrication d'une unité de panneau de verre, le procédé comprenant une étape d'assemblage, une étape d'évacuation et une étape de scellement, l'étape d'assemblage incluant fournir un assemblage,
l'assemblage incluant :
une première vitre ;
une seconde vitre agencée pour faire face à la première vitre ;
une paroi périphérique en forme de cadre prévue entre la première vitre et la seconde vitre ;
un espace interne entouré de la première vitre, la seconde vitre et la paroi périphérique ;
une couche absorbant du gaz prévue dans l'espace interne, formée sur au moins une de la première vitre ou la seconde vitre, et contenant un matériau sorbeur ; et
un port d'évacuation permettant à l'espace interne de communiquer avec un environnement externe,
l'étape d'évacuation incluant évacuer l'espace interne à travers le port d'évacuation,
l'étape de scellement incluant fermer un espace prédéterminé hors de l'espace interne pour séparer l'espace prédéterminé de l'environnement externe,
l'étape d'assemblage incluant l'étape de formation de la couche adsorbant du gaz avant que la première vitre et la seconde vitre ne soient agencées pour se faire face,
le procédé incluant appliquer, au cours de l'étape de formation de la couche adsorbant du gaz, une solution contenant le matériau sorbeur pour recouvrir au moins une de la première vitre ou la seconde vitre pour former un revêtement et solidifier le revêtement pour former la couche adsorbant du gaz,
le matériau sorbeur dans la couche adsorbant du gaz étant sous une forme d'un agrégat d'une poudre fine de sorbeur,
une taille de l'agrégat étant représentée par une taille particulaire de 20 µm ou moins.

6. Procédé selon la revendication 5, dans lequel
l'étape d'évacuation inclut évacuer l'espace interne et activer le matériau sorbeur tout en chauffant l'espace interne.

7. Procédé selon la revendication 5 ou 6, dans lequel
l'assemblage inclut en outre une cloison et un passage d'air,
la cloison est prévue pour diviser l'espace interne en un premier espace servant en tant que l'espace prédéterminé et un second espace, et
le passage d'air connecte le premier espace et le second espace ensemble.

8. Procédé selon la revendication 7, dans lequel
l'étape de scellement inclut chauffer et déformer de ce fait la cloison pour fermer le passage d'air.

9. Procédé selon l'une quelconque des revendications 5 à 8, comprenant former la couche adsorbant du gaz sur la seconde vitre.
